# FASCICULE DE BREVET EUROPEEN

(11) **EP 2 723 642 B1**
(45) Date de publication et mention de la délivrance du brevet: **03.02.2016**
(21) Numéro de dépôt: 12731561.2
(22) Date de dépôt: 13.06.2012
(51) Int. Cl.: B64D 27/02, B64D 27/00, B64D 27/26, B64D 27/14

(54) **STRUCTURE D'ACCROCHAGE D'UNE TURBOMACHINE**
AUFHÄNGESTRUKTUR EINER TURBOMASCHINE
STRUCTURE FOR MOUNTING A TURBO ENGINE

(30) Priorité: 23.06.2011 FR 1155572
(43) Date de publication de la demande: 30.04.2014
(73) Titulaire: SNECMA, 75015 Paris (FR)
(72) Inventeur: CHOUARD, Pierre-Alain, Jean-Marie, Philippe, Hugues, F-77550 Moissy-cramayel Cedex (FR); VINCENT, Thomas, Alain, Christian, F-77550 Moissy-cramayelCedex (FR)
(74) Mandataire: David, Alain
(86) Numéro de dépôt international: PCT/FR2012/051320
(87) Numéro de publication internationale: WO 2012/175843

(56) Documents cités:
- EP-A1- 0 761 945
- EP-A2- 2 332 834
- FR-A1- 2 935 953
- US-A1- 2011 079 679

## Description

### Arrière-plan de l'invention

La présente invention concerne le domaine aéronautique et plus particulièrement une structure d'accrochage d'une turbomachine à hélices propulsives non carénées.

De façon classique, les groupes motopropulseurs d'aéronefs sont enveloppés dans des nacelles pouvant être disposées à divers endroits de l'aéronef, sur ou sous une aile ou encore sur le fuselage arrière, la liaison entre le groupe motopropulseur et cette partie de l'aéronef se faisant par une structure d'accrochage de type pylône ou mât, comme dans la demande de brevet EP 0 761 945. A l'intérieur du groupe motopropulseur, le générateur de gaz forme la partie amont de la turbomachine.

Une autre structure d'accrochage est connue du document US 2011/0079679, qui est considéré comme l'art antérieur le plus proche et décrit les caractéristiques du préambule de la revendication 1.

Toutefois, lorsque la nacelle est destinée à recevoir un groupe motopropulseur à hélices simples non carénées ou un groupe motopropulseur à double rangée d'hélices non carénées (souvent désigné sous l'appellation anglaise d'open rotor) présentant une masse importante en porte à faux, la structure d'accrochage doit répondre à des contraintes spécifiques. Une solution classique pour cet accrochage est donc de recourir à un treillis de bielles isostatiques. Malheureusement, une telle structure n'est pas sans inconvénient, notamment du fait de son encombrement important qui génère un large sillage du mât en résultant sur les hélices.

### Objet et résumé de l'invention

La présente invention propose donc une nouvelle structure d'accrochage de turbomachine dont la conception permet de répondre aux contraintes spécifiques des aéronefs à hélices propulsives non carénées. Un but de l'invention est aussi de fournir une structure d'accrochage qui modifie les chemins d'efforts exercés sur le groupe motopropulseur par rapport à une structure classique et permette d'assurer une optimisation de sa performance aérodynamique.

Ces buts sont atteints par une structure d'accrochage d'un groupe motopropulseur à hélices non carénées sur le fuselage d'un aéronef, ladite structure d'accrochage étant reliée par des premiers et seconds moyens de fixation à respectivement des longerons dits avant et arrière pénétrant le fuselage et fixés à la structure porteuse de l'aéronef, caractérisée en ce qu'elle comporte une poutre longitudinale centrale solidaire à son extrémité avant d'un premier cadre, ou cadre avant, disposé dans le plan dudit longeron avant, solidaire à son extrémité arrière d'un deuxième cadre, ou cadre arrière, en porte-à-faux disposé en amont desdites hélices non carénées, et solidaire d'un troisième cadre, ou cadre intermédiaire, disposé dans le plan dudit longeron arrière, entre lesdits premier et deuxième cadres, et en ce que lesdits premier, deuxième et troisième cadres sont reliés entre eux par des poutres de reprise d'efforts, l'ensemble ainsi constitué formant un berceau pour recevoir via des moyens d'attache standard le groupe motopropulseur.

Ainsi, le recours à un berceau permet de porter une masse importante en porte-à-faux tout en réduisant le moment fléchissant du générateur de gaz du groupe motopropulseur.

De préférence, ladite poutre longitudinale centrale présente une largeur variable, plus large en amont et plus fine en aval. Ainsi, les lignes aérodynamiques de la partie arrière du pylône entourant les longerons peuvent être réduites ce qui permet d'en diminuer l'impact sur le rendement et le bruit des hélices.

Avantageusement, lesdits premiers moyens de fixation comportent deux groins coniques disposés de part et d'autre du plan médian du groupe motopropulseur et lesdits seconds moyens de fixation comportent une chape disposée dans le plan médian du groupe motopropulseur.

De préférence, lesdits groins coniques et ladite chape comportent des plots souples pour atténuer les vibrations du groupe motopropulseur.

Selon le mode de réalisation envisagé, lesdits moyens d'attache standard du groupe motopropulseur sur le berceau peuvent comporter au moins deux bielles de suspension fixées sur ledit cadre avant de part et d'autre du plan médian du groupe motopropulseur, et une pluralité de plots souples régulièrement répartis le long dudit cadre arrière ou encore une première pluralité de plots souples régulièrement répartis le long dudit cadre avant et une seconde pluralité de plots souples régulièrement répartis le long dudit cadre arrière.

Avantageusement, ledit berceau présente une structure dissymétrique avec une poutre longitudinale centrale désaxée d'un angle déterminé pour compenser l'inclinaison desdits longerons avec l'horizontale.

L'invention se rapporte également à un aéronef à hélices non carénées comportant au moins un groupe motopropulseur rattaché à son fuselage par une structure d'accrochage telle que précitée.

### Brève description des dessins

D'autres caractéristiques et avantages de l'invention seront décrits plus en détails à la lecture de la description qui va suivre de modes de réalisation de l'invention en référence aux dessins annexés sur lesquels :
La figure 1 est une vue générale de la partie arrière d'un fuselage d'aéronef à hélices propulsives simples non carénées,
La figure 2 est une vue schématique d'une structure d'accrochage selon l'invention,
Les figures 3A, 3B et 3C sont des vues selon trois plans successifs différents de la structure d'accrochage de la figure 2,
La figure 4 est une vue schématique en perspective du berceau formant la partie centrale de la structure d'accrochage selon l'invention,
La figure 4A est une vue de dessus du berceau dans une réalisation alternative,
La figure 5 représente un diagramme du moment fléchissant dans la poutre moteur, et
Les figures 6A et 6B illustrent deux exemples de positionnement possible pour le berceau.

### Description détaillée de l'invention

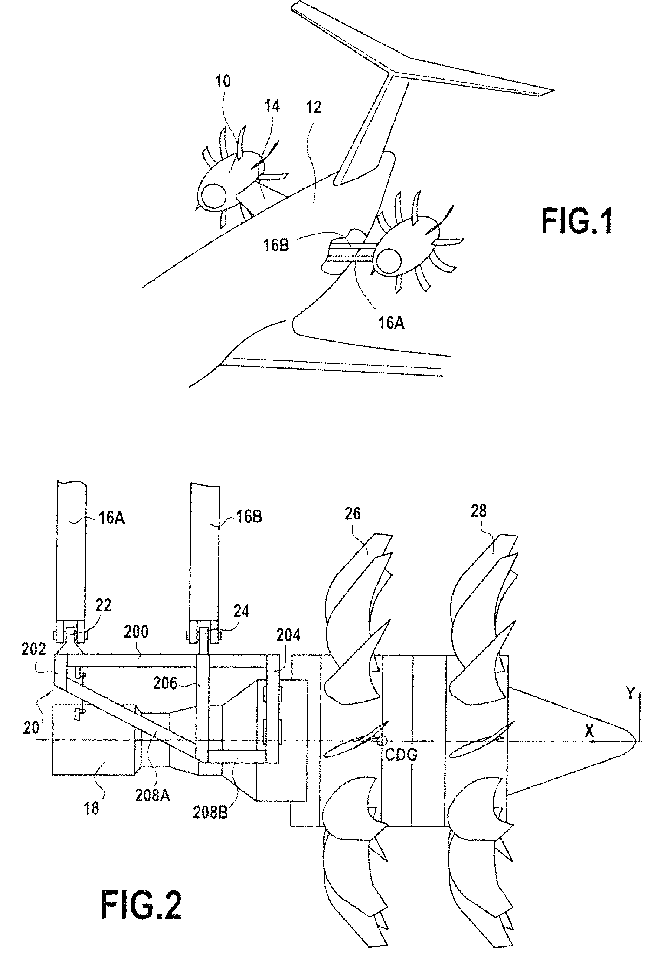

Sur la figure 1 qui illustre schématiquement la partie arrière d'un aéronef à hélices propulsives non carénées, la nacelle 10 qui entoure et protège le groupe motopropulseur de l'aéronef (l'ensemble formant ce que l'on a coutume d'appeler un turbopropulseur) est suspendue au fuselage 12 par le pylône ou mât de liaison 14 qui s'étend sensiblement perpendiculairement ou non à la surface de ce fuselage et dont classiquement les deux longerons 16A, 16B qui le pénètre sont fixés à une extrémité sur la structure porteuse de l'aéronef.

Selon l'invention et comme le montre la figure 2, à l'autre extrémité de ces longerons et destiné à recevoir le groupe motopropulseur 18, est fixé un berceau 20, relié aux longerons avant 16A et arrière 16B respectivement par des premiers 22 et seconds 24 moyens de fixation. Cette structure d'accrochage en berceau comporte une poutre longitudinale centrale 200 qui d'une part est solidaire à son extrémité avant d'un premier cadre, ou cadre avant 202, disposé dans le plan du longeron avant 16A et d'autre part est solidaire à son extrémité arrière d'un deuxième cadre, ou cadre arrière 204, en porte-à-faux, disposé en avant ou amont d'un premier groupe d'hélices propulsives non carénées 26 (lequel est suivi dans l'exemple non limitatif illustré d'un second groupe 28 tournant en sens inverse) du groupe motopropulseur.

Avantageusement, cette poutre longitudinale centrale 200 est en outre solidaire d'un troisième cadre, ou cadre intermédiaire 206, disposé dans le plan du longeron arrière 16B, entre les premier et deuxième cadres. Pour permettre une reprise des efforts dans la structure et gagner de l'inertie, les premier, deuxième et troisième cadres dont les formes respectives s'apparentent à celle d'un « fer à cheval » sont reliés entre eux par des poutres longitudinales latérales 208A, 208B ; 210A, 210B ou transversales (non représentées sur la figure).

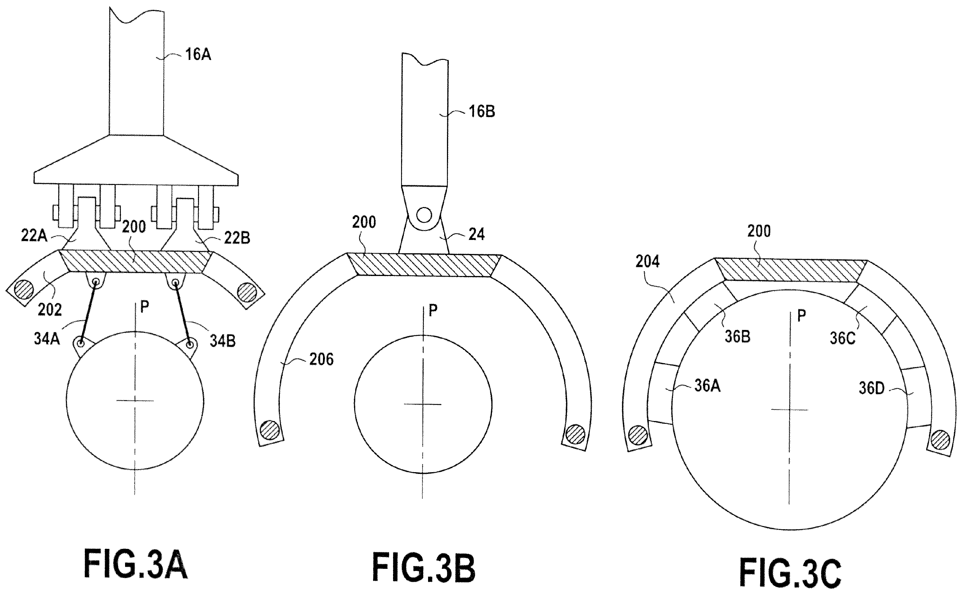

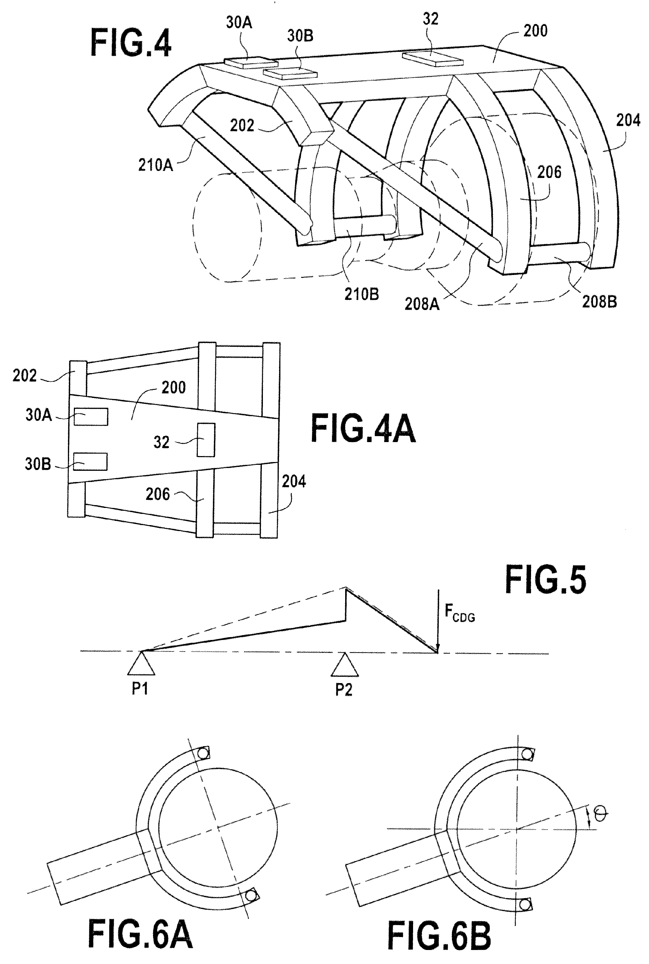

Comme le montre la figure 3A, les premiers moyens de fixation du berceau au longeron avant 16A (qui à cet effet se terminent en T) comportent deux classiques groins coniques 22A, 22B (tels ceux décrits dans des manuels de conception mécanique aéronautique usuels) disposés de part et d'autre du plan médian P du groupe motopropulseur. Ces groins coniques peuvent être montés sur des plots souples 30A, 30B (voir la figure 4) fixés sur la poutre centrale 200 pour atténuer les vibrations du groupe motopropulseur. Bien entendu, une fixation par plus de deux groins est aussi envisageable. Ces groins coniques reprennent des efforts dans les trois directions de l'espace.

Comme le montre la figure 3B, les seconds moyens de fixation du berceau sur le longeron arrière 16B comportent simplement une chape 24 disposée dans le plan médian P du groupe motopropulseur et cette chape, comme les groins coniques, peut être montée sur un plot souple 32 (voir la figure 4) fixé également sur la poutre longitudinale centrale 200 pour atténuer les vibrations du groupe motopropulseur. L'intérêt de ne comporter qu'une simple chape est de pouvoir si nécessaire réduire la largeur de la poutre longitudinale à l'arrière (voir la réalisation de la figure 4A) laquelle présente ainsi une largeur variable, plus large en amont et plus fine en aval, ce qui permet de réduire l'encombrement de la structure en amont des hélices.

La fixation du groupe motopropulseur au berceau se fait classiquement par des moyens d'attache standard formés d'une part par deux bielles de suspension 34A, 34B fixées sur la poutre longitudinale centrale 200 dans le plan du longeron avant 16A, sensiblement au niveau du cadre avant 202, de part et d'autre du plan médian P du groupe motopropulseur, et d'autre part par une pluralité de plots souples 36A - 36D régulièrement répartis le long du cadre arrière 204 (voir la figure 3C). Dans un mode de réalisation alternatif, les bielles de suspensions peuvent aussi être remplacées par des plots souples (non représentés).

Ainsi, le berceau est en liaison mécanique avec le groupe motopropulseur sur le plan du longeron avant et sur le plan arrière du générateur de gaz, en amont des hélices. Par cette liaison, le berceau reprend à l'avant les efforts Fy et Fz et à l'arrière les efforts Fx, Fy, Fz et le moment Mx (lequel est faible en fonctionnement normal mais peut devenir élevé en cas de panne), le moment fléchissant étant pris en compte en partie par les plots souples et par les bielles de suspension (ou par les autres plots souples dans le mode de réalisation alternatif précité). La figure 5 illustre de façon simplifiée le diagramme du moment fléchissant dans la poutre moteur sous un g vertical avec (traits forts) et sans (traits pointillés) la structure de l'invention (F_{CDG} est le poids du groupe motopropulseur). On peut noter que ce moment fléchissant est ainsi réduit entre le plan du longeron avant P1 et celui du moteur arrière P2. En effet, la structure de l'invention permet, en jouant sur le ratio des raideurs des plans avant et arrière, d'obtenir une meilleure répartition des charges entre les différentes phases normales de vol. De plus, sous charge limite et ultime, la mise en butée des éléments change la répartition des efforts de manière à passer plus de charge dans la poutre moteur et moins dans le berceau. Dès lors, la structure d'accrochage selon l'invention est allégée par rapport à une structure isostatique classique.

Selon la disposition des turbopropulseurs de l'aéronef et comme l'illustrent respectivement les figures 6A et 6B, le berceau peut présenter une structure parfaitement symétrique ou dissymétrique avec une poutre longitudinale centrale 200 désaxée d'un angle déterminé θ pour compenser l'inclinaison correspondante des longerons 16A, 16B avec l'horizontale. Ainsi, on peut garder une symétrie parfaite des moteurs (droite/gauche) qui doivent pouvoir être interchangeables.

On peut noter que des chapes (non représentées) avec des axes montés avec jeu peuvent aussi être installées entre le berceau et la structure porteuse de l'aéronef, entre les longerons avant et arrière, de manière à constituer un chemin d'effort activé en cas de rupture d'un longeron.

On notera également que si l'invention a été essentiellement décrite en rapport à un aéronef à hélices propulsives non carénées, il est clair qu'elle trouve aussi application à un aéronef à hélices tractives non carénées sur le fuselage arrière ou de préférence sous une aile. Dans ce cas, les cadres respectivement avant et arrière du berceau sont inversés par rapport à la description précitée.

## Revendications

1. Structure d'accrochage d'un groupe motopropulseur (10) à hélices non carénées sur le fuselage (12) d'un aéronef, ladite structure d'accrochage étant reliée par des premiers et seconds moyens de fixation à respectivement des longerons dits avant et arrière (16A, 16B) pénétrant le fuselage et fixés à la structure porteuse de l'aéronef, **caractérisée en ce qu'**elle comporte une poutre longitudinale centrale (200) solidaire à son extrémité avant d'un premier cadre, ou cadre avant (202), disposé dans le plan dudit longeron avant, solidaire à son extrémité arrière d'un deuxième cadre, ou cadre arrière (204), en porte-à-faux disposé en amont desdites hélices non carénées, et solidaire d'un troisième cadre, ou cadre intermédiaire (206), disposé dans le plan dudit longeron arrière, entre lesdits premier et deuxième cadres, et **en ce que** lesdits premier, deuxième et troisième cadres sont reliés entre eux par des poutres de reprise d'efforts (208A, 208B ; 210A, 210B), l'ensemble ainsi constitué formant un berceau pour recevoir via des moyens d'attache standard (34A, 34B ; 36A-36D) ledit groupe motopropulseur.

2. Structure d'accrochage selon la revendication 1, **caractérisée en ce que** ladite poutre longitudinale centrale présente une largeur variable, plus large en amont et plus fine en aval.

3. Structure d'accrochage selon la revendication 1 ou la revendication 2, **caractérisée en ce que** lesdits premiers moyens de fixation comportent deux groins coniques (22A, 22B) disposés de part et d'autre du plan médian du groupe motopropulseur.

4. Structure d'accrochage selon la revendication 1 ou la revendication 2, **caractérisée en ce que** lesdits seconds moyens de fixation comportent une chape (24) disposée dans le plan médian du groupe motopropulseur.

5. Structure d'accrochage selon la revendication 3 ou la revendication 4, **caractérisée en ce que** lesdits groins coniques et ladite chape comportent des plots souples (30A, 30B ; 32) pour atténuer les vibrations du groupe motopropulseur.

6. Structure d'accrochage selon la revendication 1 ou la revendication 2, **caractérisée en ce que** lesdits moyens d'attache standard du groupe motopropulseur sur le berceau comportent au moins deux bielles de suspension (34A, 34B) fixées sur ledit cadre avant de part et d'autre du plan médian du groupe motopropulseur, et une pluralité de plots souples (36A-36D) régulièrement répartis le long dudit cadre arrière.

7. Structure d'accrochage selon la revendication 1 ou la revendication 2, **caractérisée en ce que** lesdits moyens d'attache standard du groupe motopropulseur sur le berceau comportent une première pluralité de plots souples régulièrement répartis le long dudit cadre avant et une seconde pluralité de plots souples régulièrement répartis le long dudit cadre arrière.

8. Structure d'accrochage selon la revendication 1 ou la revendication 2, **caractérisée en ce que** ledit berceau présente une structure dissymétrique avec une poutre longitudinale centrale désaxée d'un angle déterminé pour compenser l'inclinaison desdits longerons avec l'horizontale.

9. Aéronef à hélices non carénées comportant au moins un groupe motopropulseur rattaché à son fuselage par une structure d'accrochage selon l'une quelconque des revendications 1 à 8.

## Patentansprüche

1. Struktur zur Ankopplung eines Triebwerks (10) mit nicht verkleideten Schrauben an den Rumpf (12) eines Luftfahrzeugs, wobei die Ankopplungsstruktur durch erste und zweite Befestigungsmittel mit sogenannten vorderen bzw. hinteren Holmen (16A, 16B), welche den Rumpf durchdringen und an der Tragstruktur des Luftfahrzeugs befestigt sind, verbunden ist, **dadurch gekennzeichnet, dass** sie einen mittleren Längsträger (200) umfasst, der an seinem vorderen Ende mit einem ersten Rahmen, oder vorderen Rahmen (202), welcher in der Ebene des vorderen Holms angeordnet ist, fest verbunden ist, an seinem hinteren Ende mit einem auskragenden zweiten Rahmen, oder hinteren Rahmen (204), welcher vor den nicht verkleideten Schrauben angeordnet ist, fest verbunden ist, und mit einem dritten Rahmen, oder Zwischenrahmen (206), welcher in der Ebene des hinteren Holms zwischen dem ersten und dem zweiten Rahmen angeordnet ist, fest verbunden ist, und dass der erste, der zweite und der dritte Rahmen durch Kraftaufnahmeträger (208A, 208B; 210A, 210B) untereinander verbunden sind, wobei die so gebildete Anordnung ein Traggestell bildet, um das Triebwerk über Standardbefestigungsmittel (34A, 34B; 36A-36D) aufzunehmen.

2. Ankopplungsstruktur nach Anspruch 1, **dadurch gekennzeichnet, dass** der mittlere Längsträger eine variable Breite aufweist, die stromaufwärts breiter und stromabwärts dünner ist.

3. Ankopplungsstruktur nach Anspruch 1 oder Anspruch 2, **dadurch gekennzeichnet, dass** die ersten Befestigungsmittel zwei konische Rüssel (22A, 22B), die auf beiden Seiten der Mittelebene des Triebwerks angeordnet sind, umfassen.

4. Ankopplungsstruktur nach Anspruch 1 oder Anspruch 2, **dadurch gekennzeichnet, dass** die zweiten Befestigungsmittel ein Gabelgelenk (24), das in der Mittelebene des Triebwerks angeordnet ist, umfassen.

5. Ankopplungsstruktur nach Anspruch 3 oder Anspruch 4, **dadurch gekennzeichnet, dass** die konischen Rüssel und das Gabelgelenk flexible Klötze (30A, 30B; 32) zum Dämpfen der Schwingungen des Triebwerks umfassen.

6. Ankopplungsstruktur nach Anspruch 1 oder Anspruch 2, **dadurch gekennzeichnet, dass** die Standardmittel zur Befestigung des Triebwerks an dem Traggestell wenigstens zwei Aufhängestangen (34A, 34B), die an dem vorderen Rahmen auf beiden Seiten der Mittelebene des Triebwerks angeordnet sind, sowie eine Vielzahl von flexiblen Klötzen (36A-36D), die entlang des hinteren Rahmens gleichmäßig verteilt sind, umfassen.

7. Ankopplungsstruktur nach Anspruch 1 oder Anspruch 2, **dadurch gekennzeichnet, dass** die Standardmittel zur Befestigung des Triebwerks an dem Traggestell eine erste Vielzahl von flexiblen Klötzen, die entlang des vorderen Rahmens gleichmäßig verteilt sind, sowie eine zweite Vielzahl von flexiblen Klötzen, die entlang des hinteren Rahmens gleichmäßig verteilt sind, umfassen.

8. Ankopplungsstruktur nach Anspruch 1 oder Anspruch 2, **dadurch gekennzeichnet, dass** das Traggestell eine unsymmetrische Struktur mit einem mittleren Längsträger, der um einen bestimmten Winkel versetzt ist, um die Neigung der Holme mit der Horizontalen auszugleichen, aufweist.

9. Luftfahrzeug mit nicht verkleideten Schrauben, umfassend wenigstens ein Triebwerk, das an dessen Rumpf durch eine Ankopplungsstruktur nach einem der Ansprüche 1 bis 8 befestigt ist.

## Claims

1. An attachment structure for attaching a power plant (10) having unducted propellers to the fuselage (12) of an aircraft, said attachment structure being connected by first and second fastener means to respective "front" and "rear" spars (16A, 16B) penetrating into the fuselage and fastened to the carrier structure of the aircraft, the attachment structure being **characterized in that** it includes a central longitudinal beam (200) that is secured at its front end to a first frame, or "front" frame (202), arranged in the plane of said front spar, that is secured at its rear end to a second frame, or "rear" frame (204), cantilevered out and arranged upstream from said unducted propellers, and that is secured to a third frame, or "intermediate" frame (206), arranged in the plane of said rear spar between the first and second frames, and **in that** said first, second, and third frames are connected together by force-takeup beams (208A, 208B; 210A, 210B), the assembly as constituted in this way forming a cradle for receiving said power plant via standard attachment means (34A, 34B; 36A-36D).

2. An attachment structure according to claim 1, **characterized in that** said central longitudinal beam is of varying width, being wider upstream and narrower downstream.

3. An attachment structure according to claim 1 or claim 2, **characterized in that** said first fastener means comprise two conical projections (22A, 22B) arranged on either side of the midplane of the power plant.

4. An attachment structure according to claim 1 or claim 2, **characterized in that** said second fastener means comprise a lug (24) arranged in the midplane of the power plant.

5. An attachment structure according to claim 3 or claim 4, **characterized in that** said conical projections and said lug include flexible pads (30A, 30B; 32) for attenuating the vibration of the power plant.

6. An attachment structure according to claim 1 or claim 2, **characterized in that** said standard attachment means for attaching the power plant to the cradle comprise at least two suspension links (34A, 34B) fastened to said front frame on either side of the midplane of the power plant, and a plurality of flexible pads (36A-36D) regularly distributed along said rear frame.

7. An attachment structure according to claim 1 or claim 2, **characterized in that** said standard attachment means for attaching the power plant to the cradle comprise a first plurality of flexible pads regularly distributed along said front frame and a second plurality of flexible pads regularly distributed around said rear frame.

8. An attachment structure according to claim 1 or claim 2, **characterized in that** said cradle presents an asymmetrical structure with a central longitudinal beam offset by a determined angle to compensate for the angle of inclination of said spars relative to the horizontal.

9. An aircraft having unducted propellers and including at least one power plant attached to its fuselage by an attachment structure according to any one of claims 1 to 8.
